Europäisches Patentamt

**European Patent Office**

**Office européen des brevets**

(19)

(11) Publication number: **0 024 785**
**B1**

(12) **EUROPEAN PATENT SPECIFICATION**

(45) Date of publication of patent specification: **15.02.84**

(51) Int. Cl.³: **B 62 D 55/28**

(21) Application number: **80301434.9**

(22) Date of filing: **01.05.80**

(54) Track assembly for track-laying vehicle.

(30) Priority: **23.08.79 PC T/US79/00644**

(43) Date of publication of application:
**11.03.81 Bulletin 81/10**

(45) Publication of the grant of the patent:
**15.02.84 Bulletin 84/7**

(84) Designated Contracting States:
**DE FR GB IT**

(56) References cited:
**CH - A - 109 050**
**DE - A - 2 806 531**
**DE - A - 2 815 455**
**GB - A - 1 515 450**
**US - A - 3 357 750**
**US - A - 3 829 173**
**US - A - 4 026 608**

(73) Proprietor: **CATERPILLAR TRACTOR CO.**
**100 Northeast Adams Street**
**Peoria Illinois 61629 (US)**

(72) Inventor: **Meisel Jr., Thomas C.**
**3211 West Wilshire**
**Peoria, Illinois 61614 (US(**

(74) Representative: **Jackson, Peter Arthur et al,**
**GILL JENNINGS & EVERY 53-64 Chancery Lane**
**London WC2A 1HN (GB)**

Courier Press, Leamington Spa, England.

Track assembly for track-laying vehicle

The invention relates to a track assembly for a track-laying vehicle having wide low ground pressure (LGP) track shoes.

A conventional track-laying vehicle, such as a tractor, is mounted on a pair of endless track assemblies which include a plurality of pivotally interconnected track shoes. The track shoes are pivotally connected together by a link assembly which is disposed intermediate the width of the shoes and which includes pairs of laterally spaced links pivotally interconned by pin and bushing assemblies. Upon operation of the vehicle the track shoes are subjected to severe torsional loads, particularly when relatively wide low ground pressure (LGP) track shoes are employed and the vehicle traverses uneven terrain wherein the track shoes engages rocks, stumps and the like. Such loading of the track shoes tends to bend them as well as to impose shear loads on the bolts which secure the track shoes to the link assembly.

Furthermore, such torsional loads are transmitted to the pin and bushing assemblies which tends to wallow-out the bushing bores and to cause pin drift. Should the forces imposed on the pin and bushing assemblies become too severe, the links may also be subjected to damage, such as cracking. Similar problems also arise with pin and bushing assemblies of the sealed and lubricated type wherein extraneous forces imposed thereon subject the assemblies to loss of lubricant. A related problem is one of track shoe interference whereby an end of one track shoe will deflect into engagement with an end of an adjacent track shoe to cause metal-to-metal contact therebetween to cause wear thereof.

Although the above problems are not readily apparent with respect to conventional track assemblies, having track shoes with relatively small widths, such problems become pronounced when a standard track shoe is substantially widened. The widened track shoe (LGP or low ground pressure track shoe) has found particular application when the vehicle is working over swampy or marshy ground conditions, such as during a logging operation. The floatation, traction and related operational characteristics of the vehicle are greatly aided with the use of the wider track shoes. However, the widened track shoes aggravate the above-mentioned problems since the cantilevered ends thereof, outboard of the link assembly, create substantial moments when forces are applied to the ends of the track shoes, such as when the track shoes engage a rock, tree stump, or the like. It should be further understood that since the outboard ends of the track shoes are disconnected from each other the reaction forces imposed on one track shoe will not be fully shared by the other track shoes.

Although the basic problem of transmitting high torsional loads to the track shoes and link assembly may be somewhat alleviated by "beefing-up" the component parts thereof, it should be obvious to those skilled in the arts relating hereto that such an approach has many economical and operating disadvantages, including those resulting from the substantial weight that must be added to the track assembly.

CH—A—109050 discloses a track assembly comprising a plurality of overlapping track shoes; a link assembly incorporating sealed and lubricated joints for pivotally interconnecting the track shoes together and disposed intermediate the widths thereof; and pivot means adjacent to at least one edge of the track assembly for limiting relative movement of adjacent shoes. However, the link assembly joints are part spherical joints which are intended to allow relative twisting of adjacent track shoes about a longitudinal axis of the track assembly, and the edge pivot means are intentionally made as loose joints to accommodate the twisting. This would be quite unacceptable in a modern track assembly in which the link assembly joints incorporate pin and bushings of the sealed and lubricated type, and in which the adjacent edges of adjacent track shoes closely overlap one another.

According to the invention, a track assembly for a track-laying vehicle of the type having drive sprocket means for driving the track assembly, idler means for engaging and guiding the track assembly, and a plurality of longitudinally spaced track roller means for engaging the track assembly; the track assembly comprising a plurality of overlapping track shoes; a link assembly incorporating sealed and lubricated joints for pivotally interconnecting the track shoes together and disposed intermediate the widths thereof; and pivot means adjacent to at least one edge of the track assembly for limiting relative movement of adjacent shoes; is characterised in that the track shoes are wide low ground pressure track shoes; that the sealed and lubricated joints of the link assembly are pin and bushing assemblies; and that the pivot means adjacent to at least one edge of the track assembly are anti-torsion means comprising a chain of pivotally interconnected links which are secured to the track shoes, the chain incorporating pin and bushing assemblies of the sealed and lubricated type.

The anti-torsion link chains incorporating pin and bushing assemblies of the sealed and lubricated type, provided in accordance with the invention, substantially solves the problems with respect to the use of wide LGP track shoes of counteracting the high torsional loads imposed on a track assembly which would otherwise cause wallowing out of the bushing bores;

pin drift; link cracking; seal failure; track shoe bending or breaking; wear resulting from metal to metal contact between adjacent track shoes; and/or loosening or breakage of bolts which secure the track shoes to the link assembly.

It may be sufficient if a single one of the anti-torsion link chains is mounted adjacent to only one side edge of the track assembly. Alternatively, there may be one of the link chains mounted adjacent to each side edge of the track assembly, in which case the links may be single links each secured to a respective one of the track shoes, adjacent ends of adjacent links being fitted side by side, one fixed and the other pivotable on a pin with a lubricant seal positioned between the two relatively pivotable link ends.

A track-laying vehicle may be fitted interchangeably with such a track assembly if track shoes of standard size and LGP track shoes having the anti-torsion link chains attached thereto are selectively attached to a common link assembly.

An example of a tractor fitted with a track assembly according to the invention, and a comparison with the prior art, are illustrated in the accompanying drawings, wherein:—

Figure 1 is a side elevation of the tractor;

Figure 2 is an enlarged plan partially illustrating the track assembly, generally as seen in the direction of arrows II—II in Figure 1, with parts removed for clarification purposes;

Figure 3 is a section taken on the line III—III in Figure 2;

Figure 4 is a section to an enlarged scale through a lubricated and sealed pivot means employed in the track assembly, taken on the line IV—IV in Figure 2.

Figure 5 is a partial side elevation of a conventional track assembly showing the engagement of a track shoe thereof with a stationary object;

Figure 6 schematically illustrates the reaction force and moment applied to the track shoe, as generally viewed in the direction of arrows VI—VI in Figure 5.

Figures 7 and 8 are views similar to Figures 5 and 6, respectively, but illustrating the track assembly according to this invention; and,

Fig. 9 is a schematic view similar to Fig. 8, but illustrating a modification of the track assembly embodiment of this invention.

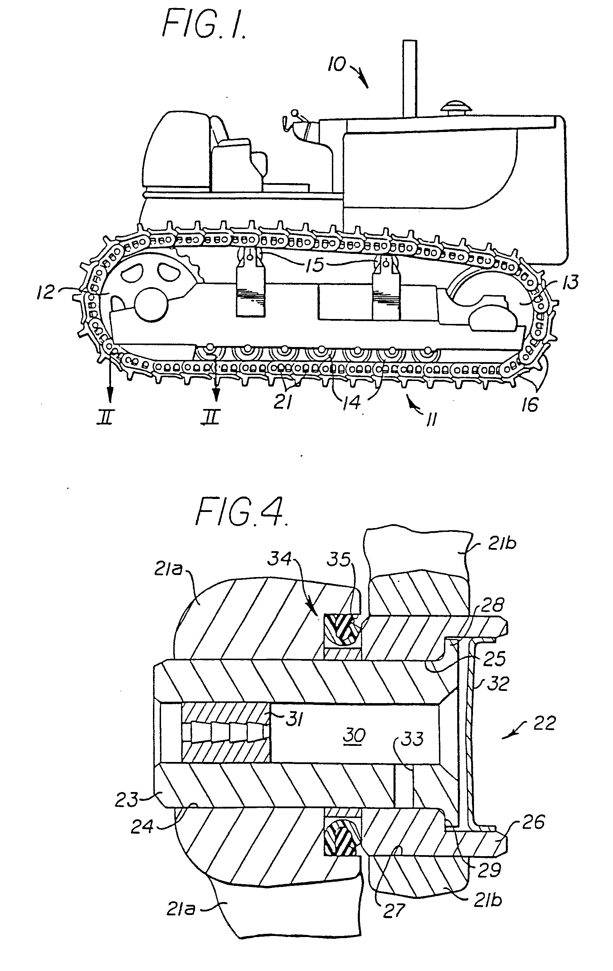

Fig. 1 illustrates a track-laying tractor 10 employing a pair of endless track assemblies 11 (one shown) of this invention thereon. Although the track assembly is particularly adapted for use on a tractor, it should be understood that the track assembly will find application to other vehicles, such as track-laying excavators. In the tractor application illustrated in Fig. 1, each track assembly 11 is mounted in a conventional manner on a drive sprocket 12, an idler 13, a plurality of longitudinally spaced track rollers 14, and a pair of upper guide rollers 15, when needed.

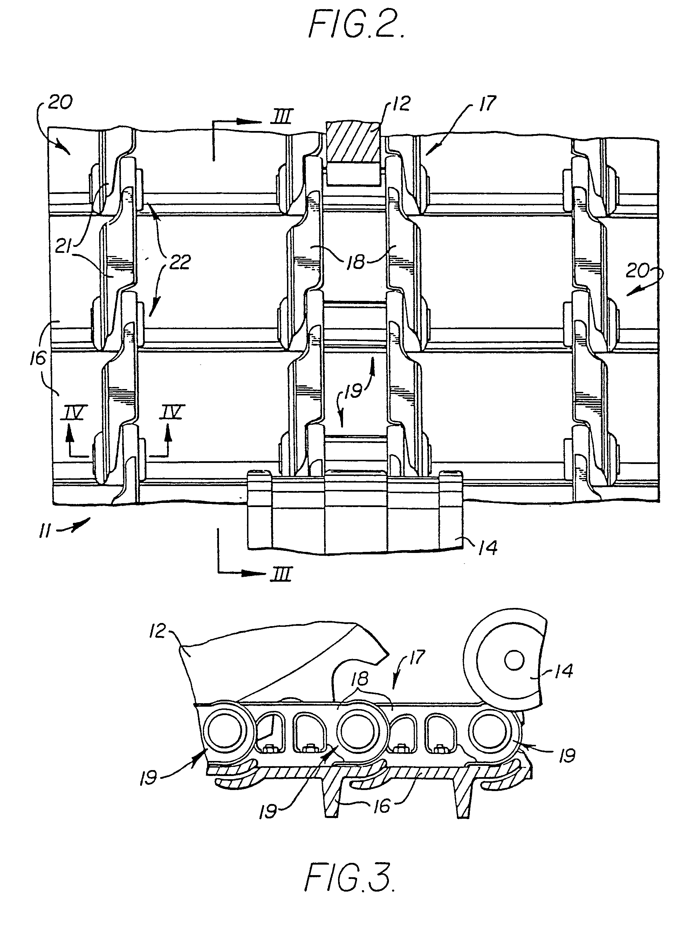

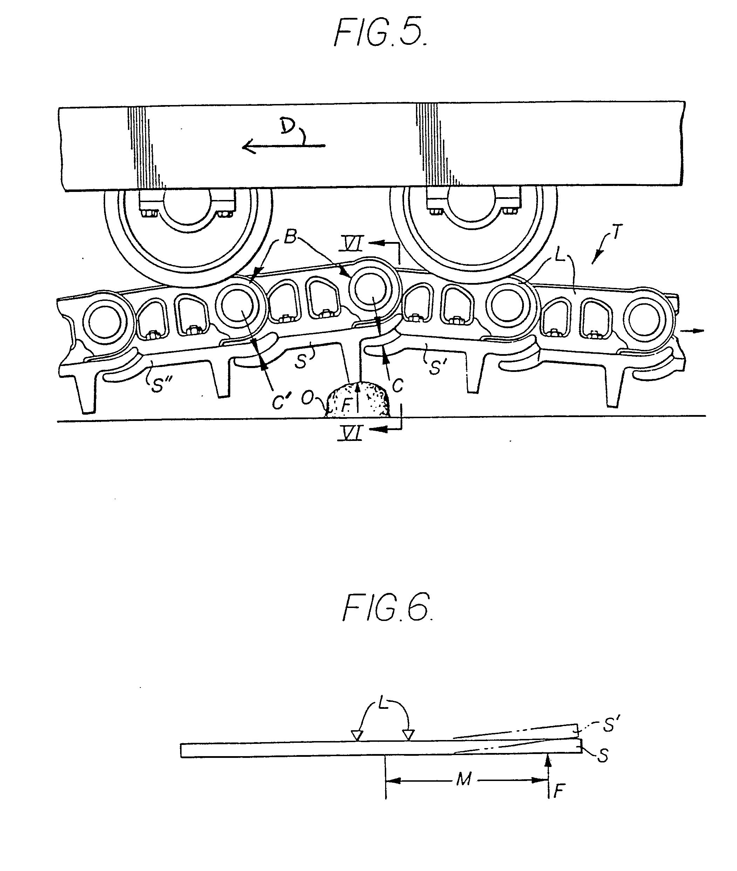

Referring to Figs. 2 and 3, track assembly 11 comprises a plurality of track shoes 16 which are pivotally interconnected by an articulated link assembly 17. Link assembly 17 is disposed intermediate the widths of track shoes 16 and includes a plurality of pairs of links 18, pivotally interconnected together by standard pin and bushing assemblies 19. The teeth of drive sprocket 12 engage the bushings of pin and bushing assemblies 19 to drive track assembly 11 in a conventional manner with the track assemblies being guided by idler 13 and rollers 14 and 15 which engage upper rail portions of links 18.

Track assembly 11 further comprises a pair of laterally spaced articulated chains 20 which provide anti-torsion means for pivotally interconnecting track shoes 11 together and for counteracting torsional loads imposed thereon. It should be noted that drive sprocket 12, idler 13 and rollers 14 and 15 are solely engaged with link assembly 17. Each chain 20 comprises a plurality of single links 21, each of which is bolted or otherwise suitably secured to a respective track shoe 16.

Fig. 4 illustrates a pivot means 22 for pivotally connecting each adjacent pair of links 21 together. Pivot means 22 may be of the sealed and lubricated type comprising a tubular pin 23, having a first end press-fitted or otherwise suitably secured within a bore 24 defined in a first link 21a. A second opposite end of pin 23 is slip-fitted in bearing relationship within a bore 25, defined in an annular bearing bushing 26. Bearing bushing 26 may be press-fitted or otherwise suitably secured within a bore 27, defined in a second, next adjacent link 21b, to thus pivotally connect links 21a and 21b together.

The second end of pin 23 has an annular flange 28 formed on the end thereof which seats within an annular recess 29, defined on bearing bushing 26. An oil cavity 30 is defined in pin 23 and is closed at one end by a plug 31, releasably secured in the pin, and closed at the other end by an annular cover 32 which is suitably releasably secured within bearing bushing 26. One or more radial ports 33 may be formed through the sidewall of pin 23 to communicate lubricating oil to the mating bearing surfaces of pin 23 and bearing bushing 26. A standard annular lip seal 34 is mounted in an annular recess 35, defined in link 21a, to prevent the ingress of contaminants within pivot means 22. As will be appreciated by those skilled in the art, other types of pivot means may be utilized in lieu of pivot means 22.

Fig. 5 illustrates a conventional track assembly T having an end of a track shoe S thereof engaging a stationary object O, such as a rock. Track shoe S is of the low ground pressure type (LGP) having a greater width (e.g. 83 cm (34 in.)) than the width (e.g. 59 cm (23 in.)) of a standard track shoe. As schematically illustrated in Fig. 6, such track shoe engagement, assuming forward movement of the tractor in direction D, will impose a reaction force F on an end of a track shoe S to generally deflect and twist the track shoe, as illustrated by S'. Such deflection and twisting of track shoe S, both in its length and width directions, will separate the lug of engaged track shoe S with respect to the lug of a trailing track shoe S' to create a clearance C therebetween.

Such clearance is normally maintained at approximately 5 mm (0.20 in.) whereas testing has shown that clearance C in Fig. 5 will enlarge to approximately 25 mm (1.0 in.) when reaction force F is applied to an end of track shoe S. Furthermore, the leading edge of track shoe S will engage the trailing edge of leading track shoe S", as shown at C', to reduce the desired clearance to zero. Thus, while the trailing edge of track shoe S is unsupported, the leading edge thereof engages leading shoe S" in metal-to-metal contact therewith to not only place substantial loads on pin and bushing assemblies B of track assembly T, but to also place unduly high stresses on track shoes S and attendant parts of the track assembly.

The imposition of such loads on pin and bushing assemblies B will tend to wallow-out the bores of the bushings thereof and to also induce pin drift, breakage and/or scoring. These problems are particularly critical with respect to standard sealed and lubricated pin and bushing assemblies, the wear of which becomes greatly accelerated with the loss of lubricant. Also, links L and the bolts connecting them to track shoes S are subjected to extraneous forces which could adversely affect their service life.

Reaction force F also tends to subject track shoes S to bending and/or breakage. The interference effected between adjacent track shoes S and S" and illustrated at C' in Fig. 5 tends to accelerate the wear of the shoes, particularly at the overlapping lugs or lips thereof. Furthermore, bolts securing links L to track shoes S are subjected to loosening and possible breakage, primarily due to the tensional and shearing loads imposed thereon.

The above problems are, of course, substantially eliminated with respect to conventional track shoes wherein the width thereof is kept within acceptable short limits. However, when a standard track shoe is necessarily widened to accommodate certain operating and field conditions, moment arm M (Fig. 6) is substantially lengthened and track assembly T is accordingly subjected to forces of the type described above which could cause premature failure of the track assembly.

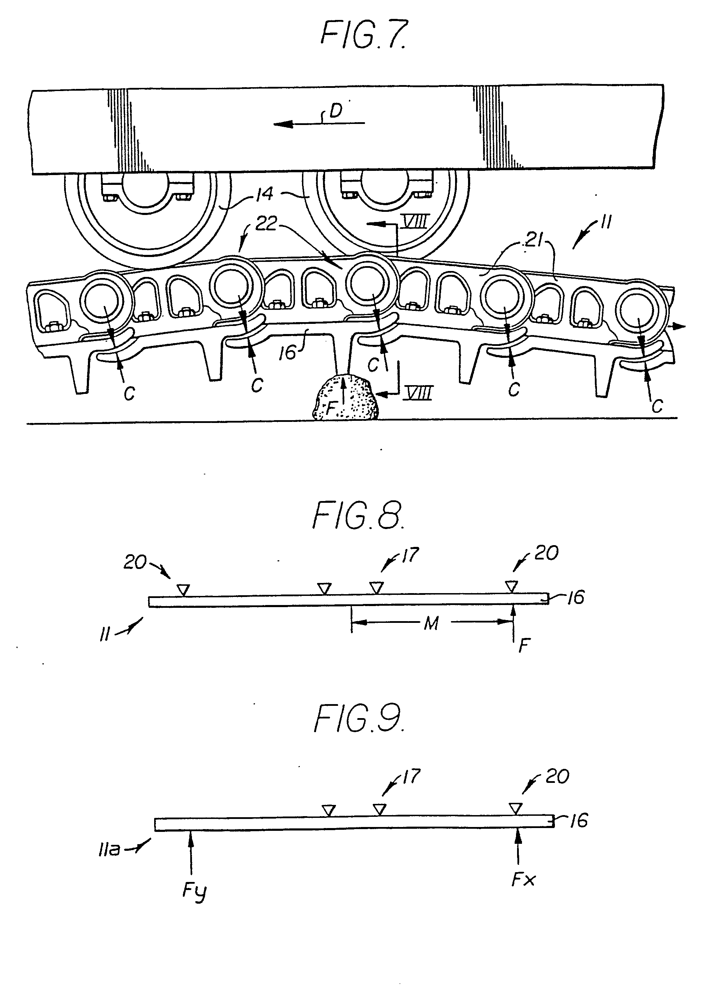

Figs. 7 and 8 are views similar to 5 and 6, respectively, but illustrate application of a pair of anti-torsion means 20 of this invention to track assembly 11. Anti-torsion means 20 substantially reduce the above problems, discussed in connection with conventional track assembly T of Figs. 5 and 6, including a dramatic reduction in the twisting of track assembly 11, substantial elimination of track shoe deflection and interference, and elimination of the unduly high torsional loading imposed on link assembly 17 (Fig. 2).

As shown in Fig. 7, a reaction force F created by engagement of a particular track shoe 16 with a stationary object O, such as a rock, will permit track shoes 16 to pivot relative to each other in a normal manner and in a horizontal plane, about bushing assemblies 22, due to the torsional rigidity added to track assembly 11 by anti-torsion means 20. The reaction force is thus absorbed and shared by a plurality of the interconnected track shoes 16. In this regard it should be noted that the clearance C between the leading and trailing ends of each pair of adjacent track shoes 16 is maintained substantially uniform throughout track assembly 11, i.e., approximately 5 mm (0.20 in.). Thus, the above enumerated problems with respect to the utilization of wide low ground pressure track shoes are substantially eliminated by this invention, i.e., undue torsional loading of track shoes 16 and link assembly 17 is virtually eliminated. It should be also noted that all known conventional track assemblies, wherein multi-link assemblies are used in association with track shoes, are primarily intended to fit a particular drive or roller system and do not address the problem of high moments resulting from forces being applied to the ends of wide low ground pressure track shoes.

Track assembly 11 finds particular application to track-laying vehicles which are adapted to work over swampy or marshy ground conditions, such as those encountered in logging operations. Although track assembly 11 finds particular application to tractor 10 (Fig. 1), it should be understood that it may be used on other types of track-laying vehicles such as excavators.

As discussed above with particular reference to Figs. 7 and 8, track assembly 11 will exhibit substantial torsional rigidity due to the construction and arrangement of anti-torsion means or chains 20 thereon. Upon the driving of sprocket 12 (Fig. 1), a plurality of track shoes 16 will substantially share and absorb any reaction loads imposed on track assembly 11. Track shoe clearances C (Fig. 7) are maintained substantially uniform throughout the length of track assembly 11 even when the end of a particular track shoe 16 engages an immovable object O, such as a rock. It should be noted that the ends of track shoes 16, disposed outboard of link assembly 17, are maintained in cantilevered relationship and that the link assembly is solely engaged by sprocket 12, idler 13, and rollers 14 and 15. It should be further noted that chains 20 provide some lateral protection to link assembly 17 to prevent objects from moving theretowards.

A commercial advantage of track assembly 11 of this invention is that track shoes 16 and attached chains 20 may be removed from link assembly 17 and replaced with standard, shorter width track shoes should the need arise. Thus, track shoes 16 and chains 17 of track assembly 11 may be considered as optional equipment for use on tractor 10. Furthermore, it may prove desirable in certain applications, wherein chain 20 is constructed in the form of link assembly 17 (double links 18 rather than single links 21), to replace worn links 18 with unworn links of chain 20 should the need arise. In particular, the upper or "rail" surfaces of links 18 do not engage with sprocket 12, idler 13, or rollers 14 and are thus not subjected to wear.

Fig. 9 illustrates a modification 11a of track assembly 11 wherein one of the anti-torsion means 20 has been removed from the track assembly. As shown, a reaction force $F_x$, imposed on one end of a particular track shoe 16, is absorbed by the track assembly in substantially the same manner as described above, i.e., the single anti-torsion means 20 will provide substantial torsional rigidity to the track assembly. Furthermore, a reaction force $F_y$ applied to the opposite end of track assembly 11a, which does not have an anti-torsion means 20 secured thereon, would also be substantially absorbed by the track assembly due to the inherent torsional rigidity of the track assembly, afforded by anti-torsion means 20.

In view of the above, it can be seen that track assembly 11 of this invention, employing at least one anti-torsion means 20 therein, will substantially increase the torsional rigidity of the track assembly over conventional track assemblies wherein wide low ground pressure shoes 16 are employed. Thus, track assembly 11 will exhibit a prolonged service life over conventional track assemblies (Fig. 5) of this type and is adapted for expeditious conversion to a standard track assembly having shorter shoes.

**Claims**

1. A track assembly for a track-laying vehicle of the type having drive sprocket means (12) for driving the track assembly (11), idler means (13) for engaging and guiding the track assembly (11), and a plurality of longitudinally spaced track roller means (14) for engaging the track assembly (11); the track assembly comprising a plurality of overlapping track shoes (16); a link assembly (17) incorporating sealed and lubricated joints for pivotally interconnecting the track shoes (16) together and disposed intermediate the widths thereof; and pivot means adjacent to at least one edge of the track assembly for limiting relative movement of adjacent shoes; characterised in that the track shoes (16) are wide low ground pressure track shoes; that the sealed and lubricated joints of the link assembly (17) are pin and bushing assemblies; and that the pivot means adjacent to at least one edge of the track assembly are anti-torsion means (20) comprising a chain of pivotally interconnected links (21) which are secured to the track shoes, the chain incorporating pin and bushing assemblies (22) of the sealed and lubricated type.

2. A track assembly according to claim 1, wherein each edge of the assembly is provided with one of the chains and the links (21) are single links each secured to a respective one of the track shoes, adjacent ends (21a, 21b) of adjacent links being fitted side by side, one fixed and the other pivotable on a pin (23) with a lubricant seal (34) positioned between the two relatively pivotable link ends.

3. A track according to claim 2, wherein the second link end (21b) has a bore (27) in which a separate bushing (26) is secured, the bushing being pivotally mounted on the pin.

4. A track assembly according to claim 1, wherein the links (21) of the chains are interchangeable with links of the link assembly (17).

**Revendications**

1. Chenille pour un véhicule à chenilles du type comportant une roue dentée motrice (12) pour entraîner la chenille (11), une roue libre (13) pour venir en contact et pour guider la chenille (11) et un certain nombre de galets espacés longitudinalement (14) pour venir en contact avec la chenille (11); cette dernière comprenant un certain nombre de patins recouvrants (16); un ensemble d'articulation (17) comportant des joints hermétiques et lubrifiés pour interconnecter à pivotement les patins (16) et disposé en un point intermédiaire de leurs largeurs; et des pivots adjacents à au moins un bord de la chenille pour limiter le mouvement relatif des patins adjacents, caractérisé en ce que les patins (16) sont des patins larges à faible pression de contact avec le sol; en ce que les joints hermétiques et lubrifiés de l'ensemble d'articulation (17) sont des ensembles à pivot et coussinet; et en ce que les pivots adjacents à au moins un bord de la chenille sont des moyens antitorsion (20) comprenant une chaîne composée de maillons interconnectés à pivotement (21) qui sont fixés aux patins de la chenille, la chaîne comportant des ensembles (22) comprenant un pivot et un coussinet du type hermétique et lubrifié.

2. Chenille selon la revendication 1, dans laquelle chaque bord de la chenille est pourvu de l'une des chaînes et les maillons (21) sont des maillons simples dont chacun est fixé à l'un des patins, les extrémités adjacentes (21a, 21b) des maillons adjacents étant disposés côte à côte, l'un étant fixe et l'autre pouvant pivoter sur un axe (23) avec un joint lubrifiant (34) disposé entre les deux extrémités des maillons pouvant pivoter l'une par rapport à l'autre.

3. Chenille selon la revendication 2, dans laquelle la seconde extrémité de maillon (21b) présente un perçage (27) dans lequel est fixé un coussinet séparé (26), ce coussinet étant monté à pivotement sur l'axe.

4. Chenille selon la revendication 1, dans laquelle les maillons (21) des chaînes sont interchangeables avec les maillons de l'ensemble d'articulation (17).

**Patentansprüche**

1. Eine Kettenanordnung für ein Kettenfahrzeug der Bauart mit Antriebskettenradmitteln (12) zum Antrieb der Kettenanordnung (11), Leerlaufmitteln (13) zum Eingriff mit und zum Führen der Kettenanordnung (11), und mit einer Vielzahl von in Längsrichtung mit Abstand angeordneten Kettenrollenmitteln (14) zum Eingriff mit der Kettenanordnung (11), wobei die Kettenanordnung folgendes aufweist: Eine Vielzahl von überlappenden Kettenschuhen (16), eine Verbindungsanordnung (17) mit abgedichteten und geschmierten Verbindungen zur Schwenkverbindung der Kettenschuhe (16) miteinander, und zwar angeordnet zwischen deren Breiten, und Schwenkmittel benachbart zu mindestens einer Kante der Kettenanordnung, um die Relativbewegung benachbarter Schuhe zu begrenzen, dadurch gekennzeichnet, daß die Kettenschuhe (16) breite Tiefgrunddruck-Kettenschuhe (low ground pressure — LGP-Kettenschuhe) sind, daß die abgedichteten und geschmierten Verbindungen der Verbindungsanordnung (17) Stift- und Büchsenanordnungen sind, und daß die Schwenkmittel benachbart zu mindestens einer Kante der Kettenanordnung Antitorsionsmittel; (20) sind, welche eine Kette von schwenkbar verbundenen Verbindungselementen (21) aufweisen, die an den Kettenschuhen befestigt sind, wobei die Kette Stift- und Büchsenanordnungen (22) der abgedichteten und geschmierten Bauart enthält.

2. Kettenanordnung nach Anspruch 1, wobei jede Kante der Anordnung mit einer der Ketten ausgestattet ist, und wobei die Verbindungselemente (21) einzelne Verbindungselemente sind, deren jedes an einem entsprechenden der Kettenschuhe befestigt ist, wobei benachbarte Enden (21a, 21b) der benachbarten Verbindungselemente Seite an Seite angepaßt sind, und zwar eines befestigt und das andere schwenkbar auf einem Stift (23) mit einer Schmiermitteldichtung (34) angeordnet zwischen den zwei relativ schwenkbaren Verbindungselementenden.

3. Kette nach Anspruch 2, wobei das zweite Verbindungsende (21b) eine Bohrung (27) aufweist, in der eine gesonderte Büchse (26) befestigt ist, wobei die Büchse schwenkbar an dem Stift angeordnet ist.

4. Kettenanordnung nach Anspruch 1, wobei die Verbindungselemente (21) der Ketten mit den Verbindungselementen der Kettenanordnung (17) austauschbar sind.

# FIG. I.

# FIG.4.

# FIG.2.

# FIG.3.

## FIG.5.

## FIG.6.

## FIG.7.

## FIG.8.

## FIG.9.

4